# DEMANDE DE BREVET EUROPEEN

(11) **EP 0 777 076 A1**
(43) Date de publication de la demande: **04.06.1997**
(21) Numéro de dépôt: 96402590.2
(22) Date de dépôt: 29.11.1996
(51) Int. Cl.: F16L 55/115, B65D 50/04

(54) **Bouchon d'obturation d'un conduit**

(30) Priorité: 30.11.1995 FR 9514166
(71) Demandeur: Renault, 92109 Boulogne Billancourt (FR)
(72) Inventeur: Jouault, Jacques, 78180 Montigny-le-Bretonneux (FR); Kernin, Charline, 92100 Boulogne (FR)

(57) **Abrégé**

Bouchon (1) pour l'obturation d'un conduit, comprenant un couvercle (2) de fermeture se prolongeant par un fût (3) portant des moyens de verrouillage et des moyens d'étanchéité (9), caractérisé en ce que les moyens de verrouillage sont constitués par une bague (6) élastiquement déformable qui comporte des ergots (7) de verrouillage diamétralement opposés faisant saillie radialement de part et d'autre de la bague (6), les parties intérieures saillantes de la bague (6) venant s'engager dans des logements de la surface extérieure du conduit.

## Description

La présente invention concerne un bouchon en matière plastique ou synthétique.

La présente invention concerne plus particulièrement un bouchon en matière plastique comprenant un couvercle de fermeture se prolongeant par un fût et plus particulièrement destiné à obturer l'une des extrémités d'un conduit.

On connaît de tels bouchons en matière plastique, lesquels sont montés sur le conduit par vissage, auquel cas la surface extérieure du conduit présente un filetage pour permettre la fixation du bouchon. L'étanchéité au niveau du bouchon est assurée par un joint constitué par un film fixé sur la surface intérieure du bouchon.

La stabilité dimensionnelle d'un tel bouchon en matériau plastique, notamment s'il est constitué de polyamide, dépend fortement du taux d'humidité de l'air et de la température du conduit porteur ainsi que de la relaxation des contraintes issues du moulage, lesquelles entraînent une déformation de la pièce. Le couple à appliquer à un tel bouchon en matériau pour le verrouiller ou le déverrouiller présente une grande dispersion. Les déformations géométriques peuvent nécessiter d'exercer un couple important pour déverrouiller du bouchon, d'une part, et, d'autre part, occasionner une altération du joint d'étanchéité.

En outre, ce type de verrouillage du bouchon par vissage, de même que le verrouillage dit quart de tour, connu aussi de l'état de la technique, présente l'inconvénient de ne pas pouvoir orienter le bouchon systématiquement dans la même position radiale par rapport au conduit en position de verrouillage du bouchon. Cet inconvénient s'avère particulièrement gênant lorsque le couvercle du bouchon comporte un motif décoratif ou un marquage qui doit s'intégrer obligatoirement dans l'environnement du compartiment moteur, de manière à ce que le bouchon occupe la même position radiale en position de verrouillage du bouchon.

La présente invention se propose de pallier ces inconvénients.

A cet effet, l'invention a pour objet un bouchon d'obturation d'un conduit, du type comprenant un couvercle de fermeture se prolongeant par un fût portant des moyens de verrouillage et des moyens d'étanchéité, caractérisé en ce que les moyens de verrouillage sont constitués par une bague élastiquement déformable qui comporte des ergots de verrouillage diamétralement opposés et faisant saillie radialement de part et d'autre de la bague, les parties intérieures saillantes de la bague venant s'engager dans des trous borgnes pratiqués à la surface extérieure du conduit.

Selon une caractéristique de la présente invention, la bague comporte des organes de préhension diamétralement opposés selon une direction sensiblement perpendiculaire à une droite passant par les ergots de verrouillage.

Selon une caractéristique de la présente invention, le joint d'étanchéité est réalisé en acrylique.

Selon une caractéristique de la présente invention, la bague est réalisé en polyamide.

Selon une caractéristique de la présente invention, le bouchon est réalisé par moulage de Polyéther Téréphtalate.

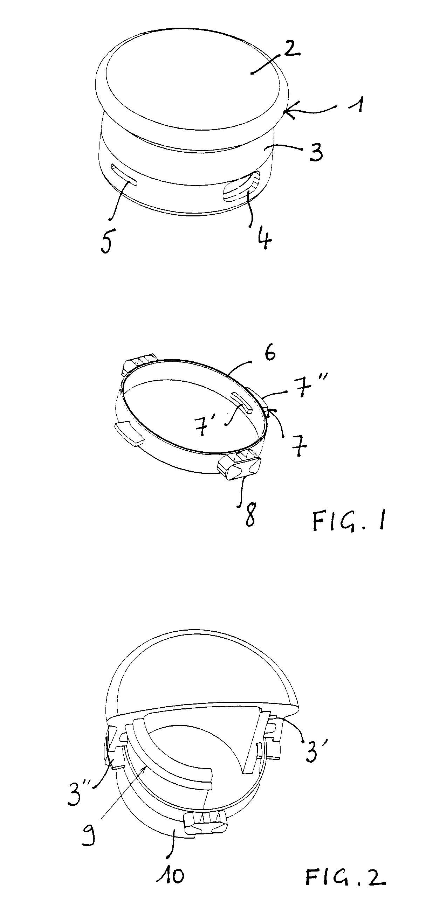

On comprendra mieux les buts, aspects et caractéristiques de la présente invention d'après la description donnée ci-après d'un mode de réalisation de l'invention, présenté à titre d'exemple non limitatif, en se référant aux dessins annexés, dans lesquels
- La figure 1 est une vue partielle en perspective d'un bouchon selon l'invention monté à l'extrémité d'un conduit.
- La figure 2 est une vue en perspective éclatée d'un tel bouchon.

Le bouchon 1 comporte un couvercle de fermeture 2 qui se prolonge par un fût 3 portant des moyens d'étanchéité et des moyens de verrouillage.

Le bouchon est réalisé par moulage d'un matériau plastique, préférentiellement du PBT (Polyéther Téréphtalate chargé en fibre de verre). Le PBT possède des caractéristiques de bonne tenue de sa coloration dans le temps.

La surface cylindrique interne du fût 3 comporte un logement 3' qui reçoit un joint d'étanchéité 9 réalisé de préférence en acrylique, par exemple de type EAM (Ethylène Acrylate) d'une dureté sensiblement égale à 40 shore A. Ce joint 9 vient coopérer avec la surface extérieure du conduit 10 lorsque le bouchon 1 vient obturer l'extrémité de ce dernier.

La surface interne du fût 3 comporte, au niveau de son ouverture, une gorge 3" qui reçoit des moyens de verrouillage du fût 3 sur le conduit 10.

Selon l'invention, les moyens de verrouillage sont constitués par une bague 6 élastiquement déformable.

La bague 6 porte des ergots 7 périphériques disposés entre eux de manière diamétralement opposée. La bague 6 est réalisée en polyamide non chargé, lequel autorise les déformations de la bague nécessaires au verrouillage et au déverrouillage du bouchon 1.

Chacun des ergots comporte une première partie 7' et une deuxième partie 7" faisant saillie radialement respectivement vers l'intérieur et vers l'extérieur de la bague 6.

La première partie 7' d'un ergot 7 vient s'engager dans des trous borgnes (non représentés) de la surface extérieure du fût 3, ce qui assure le verrouillage de bouchon 1 par rapport au conduit 10 ainsi qu'un positionnement précis du bouchon par rapport au fût.

La bague est solidarisée au fût 3 du bouchon 1 par la deuxième partie 7" des ergots 7 qui pénètre dans des ouvertures radiales 5 de forme complémentaire du fût 3.

La bague 6 comporte en outre des organes de préhension, qui peuvent par exemple être réalisés sous la forme de doigts 8 faisant saillie radialement vers l'extérieur de la bague.

Les doigts 8 sont disposés sur la bague 6, de manière diamétralement opposée, d'une part, et selon une droite sensiblement perpendiculaire à une droite joignant les ergots, d'autre part. Une sollicitation radiale appliquée simultanément aux deux doigts 8 dans le sens opposé à sa normale extérieure à la bague au niveau desdits doigts, génère ainsi, du fait de l'élasticité de la bague 6, un déplacement des ergots 7 selon la normale extérieure à la bague au niveau de ces ergots, lesquels sont alors libérés des trous borgnes.

Une fois déverrouillé, le bouchon 1 peut alors être ôté de l'extrémité du conduit.

La deuxième partie des ergots 7 assure le guidage de la bague 6 par rapport au fût 3 lorsque l'on applique une sollicitation radiale au niveau des doigts 8 de préhension.

La solution proposée permet de réaliser un verrouillage et un déverrouillage aisé du bouchon, les moyens de verrouillage et d'étanchéité étant indépendants l'un de l'autre.

En outre, le bouchon n'étant plus en contact direct avec le conduit, les matériaux plastiques utilisés pour ce dernier n'ont plus à être choisis en fonction du seul critère de bonne tenue dimensionnelle à la température mais au contraire peuvent être choisis afin de répondre, par exemple, à un critère de stabilité chromatique dans le temps, nonobstant le contact occasionnel avec des fluides circulant dans des organes du compartiment moteur.

Quant aux matériaux retenus pour constituer respectivement le joint d'étanchéité et la bague, ils peuvent être choisis de manière à assurer respectivement une bonne étanchéité radiale sur une large plage de température pour le joint et, pour la bague une bonne tenue thermique tout en présentant une élasticité radiale satisfaisante.

La surface extérieure du conduit destiné à recevoir le bouchon ne nécessitant plus l'usinage de filetage mais simplement la réalisation de trous borgnes servant de logement aux ergots de verrouillage, le bouchon selon l'invention permet donc de diminuer le coût de fabrication par rapport aux solutions antérieures.

En outre, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Bouchon (1) pour l'obturation d'un conduit (10), comprenant un couvercle (2) de fermeture se prolongeant par un fût (3) portant des moyens de verrouillage et des moyens d'étanchéité (9), caractérisé en ce que les moyens de verrouillage sont constitués par une bague (6) élastiquement déformable qui comporte des ergots (7) de verrouillage diamétralement opposés faisant saillie radialement de part et d'autre de la bague (6), les parties intérieures saillantes de la bague (6) venant s'engager dans des logements de la surface extérieure du conduit (10).

2. Bouchon (1) selon la revendication 1, caractérisé en ce que la bague (6) comporte des organes (8) de préhension diamétralement opposés selon une direction sensiblement perpendiculaire à une droite passant par les ergots (7) de verrouillage.

3. Bouchon selon l'une des revendications précédentes, caractérisé en ce que le joint d'étanchéité (9) est réalisé en acrylique.

4. Bouchon selon l'une des revendications précédentes, selon la revendication 1, caractérisé en ce que la bague (6) est réalisée en polyamide.

5. Bouchon selon l'une des revendications précédentes, caractérisé en ce qu'il est réalisé par moulage de Polyéther Téréphtalate.
